# EUROPEAN PATENT SPECIFICATION

(11) **EP 4 124 577 B1**
(45) Date of publication and mention of the grant of the patent: **03.09.2025**
(21) Application number: 21188290.7
(22) Date of filing: 28.07.2021
(51) Int. Cl.: B64D 37/30, F17C 3/02

(54) **MODULAR AIRCRAFT TANK, TANK SYSTEM, AIRCRAFT AND OPERATION METHOD**
MODULARER FLUGZEUGTANK, TANKSYSTEM, FLUGZEUG UND BETRIEBSVERFAHREN
RESERVOIR MODULAIRE D'AVION, SYSTEME DE RESERVOIR, AVION ET PROCEDE DE FONCTIONNEMENT

(43) Date of publication of application: 01.02.2023
(73) Proprietor: Airbus (S.A.S.), 31700 Blagnac (FR)
(72) Inventor: Metzner, Christian, 82024 Taufkirchen (DE); Beier, Uwe, 82024 Taufkirchen (DE); Zimmermann, Kristian, 82024 Taufkirchen (DE)
(74) Representative: KASTEL Patentanwälte PartG mbB

(56) References cited:
- DE-A1- 102016 214 509
- DE-C- 656 650
- US-A- 2 171 973
- US-A1- 2015 336 680
- US-B1- 6 527 075
- US-B2- 8 146 735
- US-B2- 8 950 195

## Description

The invention relates to an aircraft tank configured as cryogenic tank to store liquified gas, especially liquified hydrogen. Further, the invention relates to a tank system for an aircraft comprising such an aircraft tank and an aircraft equipped therewith. Further, the invention relates to an operation method for such tank or tank system.

DE 10 2016 214 509 A1 discloses a fuel reservoir for compressed hydrogen to be used on a car. The fuel reservoir has several spherical individual voluminal that are connected to each other via a connection duct.

US 6 527 075 B1 discloses a storage pack for storing pressurized gas on a vehicle. The gas storage pack includes a pressure vessel formed from a plurality of hollow chambers which have either an ellipsoidal or spherical shape. For storing oxygen on a medical car, a portable gas storage pack is provided. The pressure vessel of the gas storage pack is configured as a single continuous serial strand of interconnected spherical or ellipsoid chambers bent back-and-forth upon itself in a sinuous fashion with all the chambers lying in a single plane. This pressure vessel is encased in a protective housing that has a handle.

DE 656 650 C and US 2 171 973 A disclose a safety device for a pressure vessel which consists of a plurality of hollow spherical sections welded together and interconnected by an inner tube with a throttle between the spherical sections.

US 8 950 195 B2 discloses a continuous flow thermodynamic pump that connects an aircraft tank for LH2 with a consumer and that supplies the consumer with gaseous hydrogen.

US 8 146 735 B2 discloses a gas storage system including a tank having a tank gas outlet and a multitude of spherical gas emitting entities encapsulated by the tank. The gas emitting entities are freely contained in the tank. The gas emitting entities have a respective gas emitting device which is operable as a response to a stimulation signal. A volume surrounding the gas emitting entities inside the tank is the sole fluid connection between an opening of the gas release device and the tank outlet.

US 2015/0336680 A1 discloses an aircraft tank according to the preamble of claim 1.

Especially, the invention relates to tanks for aircrafts which run with alternative fuels, especially gases such as hydrogen.

Lightweight energy storage is one key topic for next generation aircrafts. Hydrogen offers highest energy densities, whereas the storage method (cryo, compressed, solid state/absorbed, ...) becomes a challenge.

Compressed and cryogenic hydrogen are the methods of choice for today's vehicles such as cars or airplanes. Cryo-tanks achieve the lowest added weight with approximately 0,2 kg material added per 1 kg of H2. All tanks work with applied inner pressure.

A full spherical or cylindrical outer geometry of the whole tank would be ideal to compensate pressure loads, but are suboptimal for a high volume utilization ratio so that increased drag would arise.

It is an object of the invention to enhance devices, systems and methods for storing liquified gases, especially liquified hydrogen such that they can be adapted to individual spaces within a vehicle while pressure loads can be compensated more efficiently.

For addressing this object, the invention provides a modular aircraft tank having several tank modules according to claim 1. A tank system and an aircraft equipped therewith and an operation method therefore are the subject-matters of the further independent claims.

Advantageous embodiments are the subject-matters of the dependent claims. The invention provides a modular aircraft tank for storing cryogenic liquified gas, having several tank modules each comprising a series of hollow spheres connected by a tube.

Preferably, the spheres are linearly arranged.

According to the invention, the spheres are mounted on the tube.

Preferably, the spheres have a skin made of a skin material chosen from the group comprising composite material, plastic material, fibre reinforced composite material, metal, aluminium, steel and combinations of the aforementioned materials.

Preferably, the spheres are packed in or surrounded by a thermally insulating material.

Preferably, the spheres are packed in an ultralight high performance material such as aerogels and hollow glass spheres. Different foams, especially foams adapted for cryogenics, can be used as well.

Preferably, the spheres comprise a thermoplastic liner system, preferably a toroidal thermoplastic liner system.

Preferably, adjacent spheres touch each other laminarly at pole regions. Preferably, the spheres are arranged centrally on the tube.

According to one possible embodiment, all spheres of one tank module have the same size. Alternatively, the spheres of one tank module could have different sizes.

Preferably, the tube mechanically fixes the spheres.

Preferably, the tube communicates with the interior of each hollow sphere.

Preferably, the tube is configured as a fuel pipe to fill and/or empty the hollow spheres.

Preferably, the tube is a straight tube extending linearly.

For individual tank modules, the tube can also be curved.

According to the invention, the tube is self-supporting.

According to the invention, the tube is configured to bear mechanical loads introduced by the spheres.

Preferably, the tube is made of a material chosen from the group comprising Kevlar, Kevlar composite material, composite material, metal, aluminium, steel, plastic, fibre reinforced plastic and combinations of the aforementioned materials.

Preferably, the tube is arranged centrally in the tank module.

Preferably, the tube passes through the spheres.

According to the invention, the tank module is configured as cryogenic tank module to store liquified gas, especially liquified hydrogen.

The invention provides a modular gas tank comprising several tank modules according to any of the preceding configurations, wherein the spheres of adjacent modules are stacked together in a sphere packing.

Preferably, several linear tank modules are arranged upright.

According to the invention, the tank modules are replaceable separately.

According to the invention, a space between the tank modules is filled with thermally insulating material.

Preferably, the tank modules are packed in or surrounded by a thermally insulating material.

Preferably, the tank modules are packed in an insulating material from the group comprising aerogels, foams and hollow glass spheres.

Preferably, a surrounding insulation material is held in place by a thermoplastic vacuum bag.

Preferably, spheres of neighbouring tank modules touch each other laminarly at pole regions.

Preferably, spheres of at least a first and a second tank module differ in size.

According to the invention, the modular gas tank is configured as cryogenic tank to store liquified gas, especially liquified hydrogen.

According to the invention, the modular gas tank is configured as vehicle tank, namely an aircraft tank.

According to another aspect, the invention provides a tank system for a vehicle, namely for an aircraft, comprising at least one modular gas tank according to any of the aforementioned embodiments.

Preferably, the tank system comprises a 3d piping and valve network connecting the tubes of the tank modules.

Preferably, the tank system comprises a control configured to control filling and/or emptying tank modules or a several groups of tank modules seperately.

Preferably, the tank system comprises a control configured to control emptying the tank modules such that outer spheres are emptied first, before inner spheres are emptied.

Preferably, the tank system comprises a connection wherein the connection comprises at least one further tank module according to any of the aforementioned embodiments, wherein the at least one further tank module is configured such that gas to be delivered through the connection is passed through the tube thereof.

The connection can be a gas inlet connection between a filler and at least one modular gas tank, a tank connection for supplying gas from one of the modular tanks to another of the modular tanks, or an gas outlet connection between the at least one modular gas tank and a device to be supplied with the gas from the modular gas tank.

According to another aspect, the invention provides an aircraft preferably an airplane, comprising a modular aircraft tank according to any of the aforementioned embodiments and/or a tank system as mentioned above.

According to another aspect, the invention provides a method for operating the modular gas tank or the tank system according to any of the aforementioned embodiments, wherein the method comprises at least one of the steps:
a) replacing tank modules for refilling the tank,
b) emptying outer spheres first and then emptying inner spheres,
c) in case of a tank module leaking, emptying the leaking tank module and disconnecting it from other tank modules and, during the next maintaining work, replacing only the individual leaking tank module.

Some special advantages of preferred embodiments of the invention are explained below.

Preferred embodiments of the invention relate to a sphere array fuel tank system.

Especially, preferred embodiments relate to a fuel tank system for an aircraft, more preferred an airplane. The fuel tank system is especially adapted to store cryogenic gases, especially liquified hydrogen. Preferred embodiments relate to a fuel tank system and components thereof adapted to store liquified hydrogen at very low temperatures. More especially, preferred embodiments relate to pressurized cryogenic H2 tank systems.

In theory spheres are the optimal geometry for pressurized cryogenic H2 tank systems. This is because of the best (and constant) fuel to tank weight ratio and smallest possible surface to fuel volume ratio. The latter reduces the effort for thermal insulation to a minimum. In airplane systems however space restrictions lead to cylindrical tank systems in order to fit in an aerodynamic fuselage.

Preferred embodiments of the invention do not need thick and thus heavy fuel tanks walls in order to withstand bending and buckling due to tank and fuel weight.

Preferred embodiments of the invention do not need discrete stiffeners in order to withstand bending and buckling due to tank and fuel weight.

Preferred embodiments of the invention do not need load introduction rods in order to withstand bending and buckling due to tank and fuel weight.

In preferred embodiments of the invention, there are no or only a very reduced number of elements which bypass the insulation.

Preferred embodiments of the invention do not need load carrying insulation materials, which are usually heavier and less performant in terms of insulation.

With preferred embodiments of the invention, there is no sloshing. Further, the overall airplane weight can be balanced better during flight.

For achieving some or all of the above-mentioned advantages, preferred embodiments of the invention propose to use comparably small spherical tanks, that are linearly and centrically mounted on a tube. This tube serves as a mechanical fixation of the spheres and as a fuel pipe (boss). This preferred basic principle enables geometrical freedom by arranging this linear sub-element into a 2nd or 3rd dimension.

Besides multiple technical advantages, this tank-sub-elements may help to go for a 'one system fits all', thereby reducing cost of manufacturing and certification.

As for example explained in
[1] "Close-packing of equal spheres" - Wikipedia, https://en.wikipedia.org/wiki/Close-packing_of_equal_spheres, downloaded on July 27, 2021, the 3-dimensional close-packing of equal spheres can reach 74% of the total volume and may fit in any kind of geometry, as the collective shape of the concept can be adapted to a wide range of volumes.

Therefore, these tanks may fit not only in the fuselage but also in other structures, e.g. a wing. This will also help to adapt the overall airplane balance during flight.

According to some embodiments, variations in sphere sizes is also possible to further increase dense-packaging and adapt to space restrictions. The weight of the spheres is directly proportional to the sphere diameter. At constant tank volume, small single tank-spheres achieve similar weight compared to large tanks.

Curved and closed loop arrangements are possible to further adapt to space restrictions.

**If** the spheres are small enough anti-sloshing elements are not necessary.

Linear elements may be positioned upright, thereby avoiding bending of the tubes and clearly separating liquid H2 from gaseous H2 and avoiding dead volume.

Smaller tank modules may be replaced completely instead of refilling the tank.

In case of leaking submodules, individual submodules can be emptied instead of losing the total propulsion fuel. After landing the individual element can be replaced instead removing or repairing the complete tank.

The surrounding insulation material may be held in place by a thermoplastic vacuum bag.

Spheres may also comprise a thermoplastic liner system (toroidal).

Load free insulation material can be made from ultralight high performance material such as Aerogels and hollow glass spheres.

Because of thermal conductivity, the tubes are preferably made out of Kevlar composites.

The system is preferably made out of composites, but could also comprise metals such as aluminium or steel.

Tubes may be used for structural loads. They can be straight but also curved (adapted to the outer geometry).

Elements could replace the tube system between tanks or to the energy/propulsion system.

Spheres may touch laminar at the pole region to reach tightness.

A smart thermal management system - preferably embodied by software anr/or hardware in a control of the tank system - can take advantage of the fact that the outer, less well insulated spheres, can be emptied first.

Spheres could be connected with a 3d orthogonal piping/valve network to connect/disconnect single tanks (leakage/failure scenario).

Embodiments of the invention are explained in more detail with reference to the accompanying drawings, in which:
- Fig. 1: is a perspective schematic view, partly in section along a middle plane, of an embodiment of a tank module for a cryogenic modular tank for a vehicle;
- Fig. 2: is a perspective schematic view of an airplane as example for the vehicle having a modular tank made from several of the tank modules of Fig. 1;
- Fig. 3: is a schematic sectional view through an airplane having a tank according to a comparative example which is not part of the invention;
- Fig. 4: is a schematic sectional view along plane A of Fig. 2 through the airplane having a tank system with the modular tank according to an embodiment of the invention; and
- Fig. 5: is a schematic block diagram view of an embodiment of the tank system according to then invention.

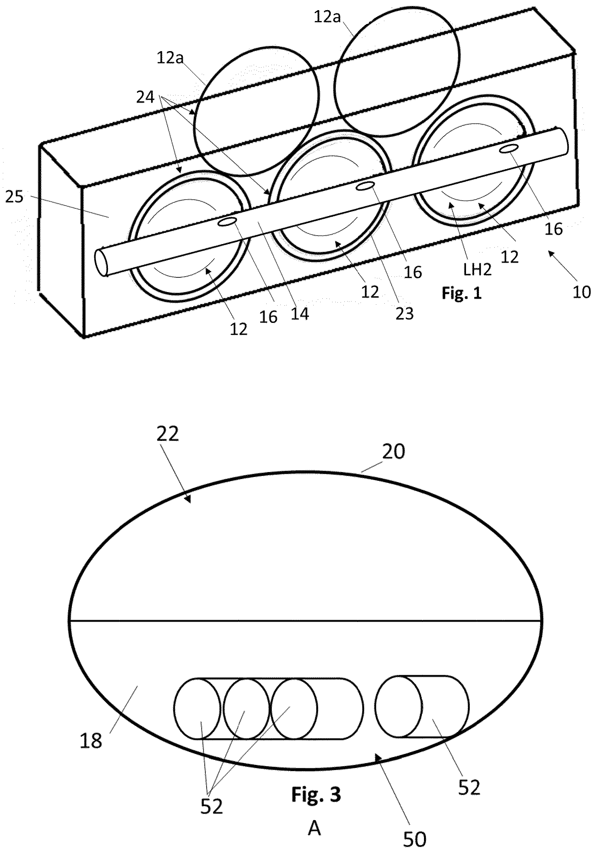

Fig. 1 shows schematically a tank module 10 for a modular cryogenic gas tank. The tank module 10 comprises a series of hollow spheres 12 connected by a tube 14. While three speres 12 are shown, it should be noted that this is only an example, and the tank module 10 can have a number n of spheres 12 with n being a natural number with n ≥ 2. Preferably the tank module 10 has 3 to 30 spheres.

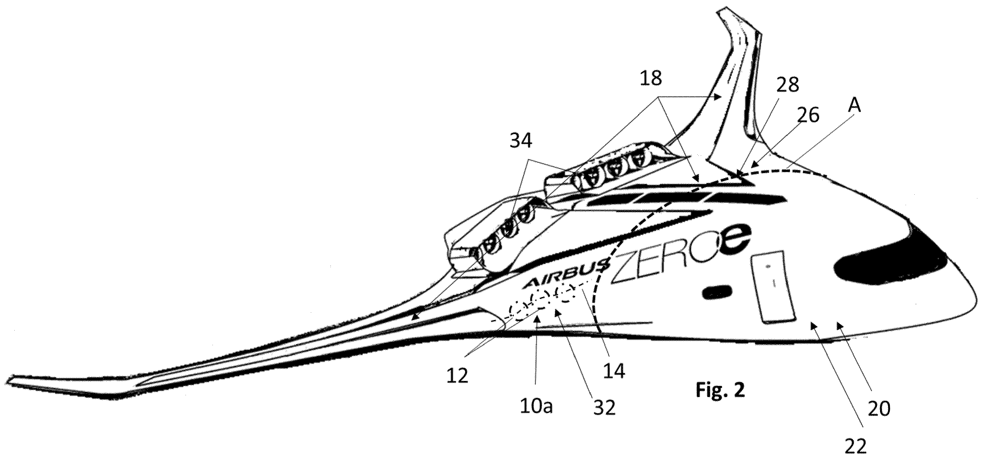

The tube 14 serves as discrete mounting - mechanical fixation for the spheres 12 - and as fuel pipe. The tube 14 has at least one opening 16 for each sphere 12 communicating with the inner space thereof. The tube 14 passes through each sphere 12 of the tank module 10. According to some embodiments (not shown), the tube 14 may end within the last sphere in the series of spheres 12. In the embodiment shown in Fig. 1, the tube 14 is straight, but as this is indicated in Fig. 2 at 10a, the tube 14 may be curved to adapt an individual tank module 10a to an inner space 18 of a vehicle 20, namely an aircraft, especially an airplane 22.

Preferably, the tube 14 is made from fibre reinforced Kevlar composite material. Hence, the tube 14 is self-supporting and configured to support the load of the spheres 12. Although not shown in Fig. 1, the tube 14 may have a valve between each neighbouring sphere 12 in order to connect/disconnect the spheres 12.

The spheres 12 are configured as single liquid hydrogen (LH2) tanks and store liquid hydrogen LH2 in their inner space. In the embodiment shown in Fig. 1, the spheres 12 are equal and are mounted linearly and centrally on the tube 14. However, depending from the inner space 18 to be filled with tank modules 10, several of the spheres 12 could vary in size. The spheres 12 have a wall or skin 23 made from a material suitable for cryogenic tanks. Preferably, the material of the skin 23 is made of composite material which can contain plastic, fibres, and metal such as aluminium and steel. Preferably, the neighbouring spheres 12 touch each other at their pole positions.

Several of the tank modules 10 as shown in Fig. 1 can be packed in a close sphere packing (see for example [1]) as this is shown in Fig. 1 by a stacking pattern 24 where spheres 12a of a further tank module 10 are indicated by simple circles.

The spheres 12, 12a are packed in an insulating material 25. Since the loads of the spheres 12 are supported by the tube 14, the insulating material 25 is load free and can be made from ultralight high-performance material such as aerogel or hollow glass spheres.

Fig. 2 shows the airplane 22 as example for the vehicle 20 equipped with a tank system 26 in an inner space 18 thereof. The tank system 26 comprises one or several modular tanks 28 made by stacking several of the tank modules 10 and connections 32 for the at least one modular tank 28.

Fig. 3 is a sectional view along plane A of Fig. 2 and shows a conventional tank system 50. The conventional tank system 50 has several single tanks 52 formed as cylinders. While the inner space 18 of the airplane 22 could be theoretically filled up to 78 % by a close packing of cylinders, the actual use of the space is restricted in the third dimension. Hence, individual long cylinders would be needed, and an enforcement would be necessary to bear the loads thereof.

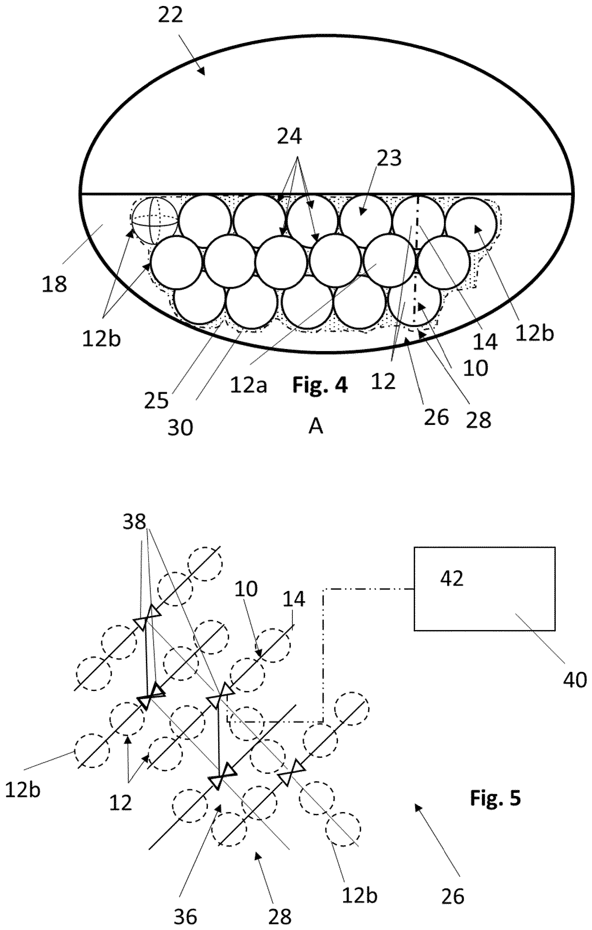

Fig. 4 shows the section through the airplane 22 along plane A of Fig. 2, wherein the inner space 18 is filled by stacking several of the tank modules 10 using a close packing of the spheres 12. The individually formed inner space 18 may be filled to a high degree (theoretically up to 74%).

In Fig. 4, one of the tubes 14 is indicated as a broken line. As visible therefrom, the linear tank modules 10 are arranged upright, i.e., the tube 14 and the series of spheres 12 are arranged vertically.

As further shown in Fig. 4, the insulating material 25 is held in place by a vacuum bag, especially a thermoplastic vacuum bag 30. The spheres 12 may also comprise a thermoplastic liner system (not shown).

As connections 32, the tank system 26 comprises a gas inlet connection between a filler (not shown) and the at least one modular tank 28, a gas outlet connection between the at least one modular tank 28 and a gas consuming device, such as a propulsion system 34, and a communication connection between modular tanks 28. Only one of these connections 32 is schematically indicated in Fig. 2. As visible therefrom, the connection 32 may comprise one or several of further tank modules 10a, wherein the gas to be transported through the connection is passed through the tube 14 thereof.

Referring to Fig. 5, the tank system 26 may comprise a 3d orthogonal piping valve network 36 to connect/disconnect single spheres 12 and/or tank modules 10. A control 40 is connected to control elements of the network such as valves 38. The control 40 embodies a smart thermal management system 42 and is configured to empty less insulated outer spheres 12b first and to empty spheres 12 located more in the interior of the modular tank 28 at a later time. Further, the control 40 is configured to empty and/or disconnect individual spheres 12 and/or tank modules 10 in case that a leakage or a failure thereof is detected.

In order to compensate pressure loads while using an individually formed inner space (18) of an aircraft more efficiently, preferred embodiments of the invention provide a sphere array fuel tank system (26) comprising several tank modules (10). Each of tank modules (10) has a tube (14) bearing a series of spheres (12) configured as single small tanks for liquified gas, especially LH2. A compact modular tank (28) may be established by a close sphere packing of the spheres (12) of the tank modules (10). Further, the tank modules (10) itself, the vehicle (20), especially an aircraft such as an airplane (22) equipped therewith and an operation method therefore are described.

### Reference sign list:

- 10, 10a: tank module
- 12, 12a: sphere
- 12b: outer sphere
- 14: tube
- 16: opening
- 18: inner space
- 20: vehicle
- 22: airplane
- 23: skin
- 24: stacking pattern
- 25: insulating material
- 26: tank system
- 28: modular tank
- 30: thermoplastic vacuum bag
- 32: connection
- 34: propulsion system
- 36: piping valve network
- 38: valve
- 40: control
- 50: conventional tank system
- 52: single tanks
- LH2: liquid hydrogen
- A: plane of section

## Claims

1. Aircraft tank configured as cryogenic tank to store liquified gas, especially liquified hydrogen, comprising hollow spheres (12, 12a, 12b) stacked together in a sphere packing,
**characterized in that**
the aircraft tank is a modular aircraft tank (28) comprising several tank modules (10) configured as cryogenic tank modules (10) to store the liquified gas and replaceable separately, wherein each of the tank modules (10) comprises a series of the hollow spheres (12, 12a, 12b) connected by and mounted on a tube (18) which is self-supporting and configured to bear mechanical loads introduced by the spheres (12), and wherein a space between the tank modules (10) is filled with thermally insulating material (25).

2. Modular aircraft tank (28) according to claim 1, **characterized in that** the spheres (12, 12a, 12b) have at least one or several of the following features:
2.1 the spheres (12) are linearly arranged,
2.2 the spheres (12) have a skin (23) made of a skin material chosen from the group comprising composite material, plastic material, fibre reinforced composite material, metal, aluminium, steel and combinations of the aforementioned materials,
2.3 the spheres (12) are packed in or surrounded by a thermally insulating material (25),
2.4 the spheres (12) are packed in an insulating material from the group comprising aerogels, foams and hollow glass spheres,
2.5 the spheres (12) comprise a thermoplastic liner system, preferably a toroidal thermoplastic liner system
2.6 adjacent spheres (12) touch each other laminarly at pole regions,
2.7 the spheres (12) are arranged centrally on the tube (14),
2.8 all spheres (12) have the same size,
2.9 the spheres (12) have different sizes,
2.11 the spheres (12) are supported on the tube (14),
2.12 each sphere (12) is configured as an individual LH2 tank.

3. Modular aircraft tank (28) according to any of the preceding claims,
**characterized in that** the tube (14) has at least one or several of the following features:
3.1 the tube (14) mechanically fixes the spheres (12),
3.2 the tube (14) communicates with the interior of each hollow sphere (12),
3.3 the tube (14) is configured as a fuel pipe to fill and/or empty the hollow spheres (12),
3.4 the tube (14) is a straight tube extending linearly,
3.5 the tube (14) is curved,
3.6 the tube (14) is made of a material chosen from the group comprising Kevlar, Kevlar composite material, composite material, metal, aluminium, steel, plastic, fibre reinforced plastic and combinations of the aforementioned materials,
3.7 the tube (14) is arranged centrally in the tank module (10),
3.8 the tube (14) passes through the spheres (12).

4. Modular aircraft tank (28) according to any of the preceding claims,
**characterized by** at least one or several of the following features:
4.1 several linear tank modules (10) are arranged upright,
4.2 the tank modules (10) are packed in or surrounded by the thermally insulating material (25),
4.3 spheres (12) of neighbouring tank modules touch each other laminarly at pole regions,
4.4 spheres (12) of at least a first and a second tank module (10) differ in size.

5. Modular aircraft tank (28) according to any of the preceding claims, **characterized in that** the insulating material (25) is chosen from the group comprising aerogels, foams and hollow glass spheres.

6. Modular aircraft tank (28) according to any of the preceding claims, **characterized in that** the surrounding insulation material (25) is held in place by a vacuum bag (30).

7. Tank system (26) for an aircraft, comprising at least one modular aircraft tank (28) according to any of the preceding claims and at least one or several of the following:
7.1 a 3d piping and valve network (36) connecting the spheres (12) and/or tubes (14) of the tank modules (10),
7.2 a control (40) configured to control filling and/or emptying single spheres (12) or tank modules (10) or individual groups of tank modules (10) separately,
7.3 a control (40) configured to control emptying the tank modules (10) such that outer spheres (12b) are emptied first, before inner spheres (12) are emptied.

8. Tank system (26) according to claim 7, comprising at least one of the following:
8.1 a gas outlet connection (32) between the at least one modular tank (28) and a device (34) to be supplied with gas from the at least one modular tank (28), wherein the gas outlet connection (32) comprises at least one further of the tank modules (10a) that comprises a series of the hollow spheres (12, 12a, 12b) connected by the tube (18) and is configured to pass the gas for supplying the device (34) through its tube (14),
8.2 a gas inlet connection (32) between a filler and the at least one modular tank (28), wherein the gas inlet connection (32) comprises at least one further of the tank modules (10a) that comprises a series of the hollow spheres (12, 12a, 12b) connected by the tube (18) and is configured to pass the gas for filling the modular tank (28) through its tube (14),
8.3 a tank connection (32) for supplying gas from one of the modular tanks (28) to another of the modular tanks (28), wherein the tank connection (32) comprises at least one further of the tank modules (10a) that comprises a series of the hollow spheres (12, 12a, 12b) connected by the tube (18) and is configured to pass the gas through its tube (14) from the one modular tank (28) to the other modular tank (28).

9. Aircraft, preferably airplane (22), comprising a modular aircraft tank (28) according to any of the claims 1 to 6 and/or a tank system (26) according to any of the claims 7 or 8.

10. Method for operating a modular tank (28) according to any of the claims 1 to 6 or a tank system (26) according to any of the claims 7 or 8, **characterized by** the step:
in case of a tank module (10) leaking, emptying the leaking tank module (10) and disconnecting it from other tank modules (10) and, during one of the next maintaining works, replacing only the individual leaking tank module (10).

11. Method according to claim 10, **characterized by** at least one of the steps:
11.1 replacing tank modules (10) for refilling the modular tank (28),
11.2 emptying outer spheres (12b) first and then emptying inner spheres (12).

## Patentansprüche

1. Luftfahrzeugtank, ausgebildet als kryogener Tank zum Lagern von verflüssigtem Gas, insbesondere verflüssigtem Wasserstoff, umfassend hohle Kugeln (12, 12a, 12b), die in einer Kugelpackung zusammengestapelt sind,
**dadurch gekennzeichnet, dass**
der Luftfahrzeugtank ein modularer Luftfahrzeugtank (28) ist, der mehrere Tankmodule (10) umfasst, die als kryogene Tankmodule (10) ausgebildet sind, um das verflüssigte Gas zu lagern und getrennt austauschbar zu sein, wobei jedes der Tankmodule (10) eine Reihe der hohlen Kugeln (12, 12a, 12b) umfasst, die durch ein Rohr (18) verbunden und daran montiert sind, das selbsttragend und dazu ausgebildet ist, mechanische Lasten, die durch die Kugeln (12) eingeführt werden, zu tragen, und wobei ein Raum zwischen den Tankmodulen (10) mit wärmeisolierendem Material (25) gefüllt ist.

2. Modularer Luftfahrzeugtank (28) nach Anspruch 1, **dadurch gekennzeichnet, dass** die Kugeln (12, 12a, 12b) wenigstens eines oder mehrere der folgenden Merkmale aufweisen:
2.1 die Kugeln (12) sind linear angeordnet,
2.2 die Kugeln (12) weisen eine Haut (23) aus einem Hautmaterial ausgewählt aus der Gruppe umfassend Verbundmaterial, Kunststoffmaterial, faserverstärktes Verbundmaterial, Metall, Aluminium, Stahl und Kombinationen der genannten Materialien auf,
2.3 die Kugeln (12) sind in ein wärmeisolierendes Material (25) gepackt oder davon umgeben,
2.4 die Kugeln (12) sind in ein Isoliermaterial aus der Gruppe umfassend Aerogele, Schaumstoffe und hohle Glaskugeln gepackt,
2.5 die Kugeln (12) bestehen aus einem thermoplastischen Verkleidungssystem, vorzugsweise einem toroidalen thermoplastischen Verkleidungssystem,
2.6 benachbarte Kugeln (12) berühren einander laminar an Polbereichen,
2.7 die Kugeln (12) sind zentral an dem Rohr (14) angeordnet,
2.8 alle Kugeln (12) weisen die gleiche Größe auf,
2.9 die Kugeln (12) weisen unterschiedliche Größen auf,
2.11 die Kugeln (12) sind auf dem Rohr (14) getragen,
2.12 jede Kugel (12) ist als einzelner LH2-Tank ausgebildet.

3. Modularer Luftfahrzeugtank (28) nach einem der vorstehenden Ansprüche, **dadurch gekennzeichnet, dass** das Rohr (14) wenigstens eines oder mehrere der folgenden Merkmale aufweist:
3.1 das Rohr (14) fixiert die Kugeln (12) mechanisch,
3.2 das Rohr (14) kommuniziert mit dem Inneren jeder hohlen Kugel (12),
3.3 das Rohr (14) ist als Kraftstoffrohr zum Füllen und/oder Entleeren der hohlen Kugeln (12) ausgebildet,
3.4 das Rohr (14) ist ein gerades Rohr, das linear verläuft,
3.5 das Rohr (14) ist gekrümmt,
3.6 das Rohr (14) besteht aus einem Material ausgewählt aus der Gruppe umfassend Kevlar, Kevlar-Verbundmaterial, Verbundmaterial, Metall, Aluminium, Stahl, Kunststoff, faserverstärkten Kunststoff und Kombinationen der genannten Materialien,
3.7 das Rohr (14) ist zentral in dem Tankmodul (10) angeordnet,
3.8 das Rohr (14) verläuft durch die Kugeln (12).

4. Modularer Luftfahrzeugtank (28) nach einem der vorstehenden Ansprüche, **gekennzeichnet durch** wenigstens eines oder mehrere der folgenden Merkmale:
4.1 mehrere lineare Tankmodule (10) sind aufrecht angeordnet,
4.2 die Tankmodule (10) sind in das wärmeisolierende Material (25) gepackt oder davon umgeben,
4.3 Kugeln (12) benachbarter Tankmodule berühren einander laminar an Polbereichen,
4.4 Kugeln (12) wenigstens eines ersten und eines zweiten Tankmoduls (10) unterscheiden sich in ihrer Größe.

5. Modularer Luftfahrzeugtank (28) nach einem der vorstehenden Ansprüche, **dadurch gekennzeichnet, dass** das Isoliermaterial (25) ausgewählt ist aus der Gruppe umfassend Aerogele, Schaumstoffe und hohle Glaskugeln.

6. Modularer Luftfahrzeugtank (28) nach einem der vorstehenden Ansprüche, **dadurch gekennzeichnet, dass** das umgebende Isoliermaterial (25) durch einen Vakuumbeutel (30) in Position gehalten wird.

7. Tanksystem (26) für ein Luftfahrzeug, umfassend wenigstens einen modularen Luftfahrzeugtank (28) nach einem der vorstehenden Ansprüche und wenigstens eines oder mehrere von:
7.1 einem 3D-Rohrleitungs- und Ventilnetzwerk (36), das die Kugeln (12) und/oder Rohre (14) der Tankmodule (10) verbindet,
7.2 einer Steuerung (40), die dazu ausgebildet ist, das Füllen und/oder Entleeren einzelner Kugeln (12) oder Tankmodule (10) oder einzelner Gruppen von Tankmodulen (10) getrennt zu steuern,
7.3 einer Steuerung (40), die dazu ausgebildet ist, das Entleeren der Tankmodule (10) so zu steuern, dass zuerst äußere Kugeln (12b) entleert werden, bevor innere Kugeln (12) entleert werden.

8. Tanksystem (26) nach Anspruch 7, umfassend wenigstens eines von:
8.1 einer Gasauslassverbindung (32) zwischen dem wenigstens einen modularen Tank (28) und einer Vorrichtung (34), die mit Gas aus dem wenigstens einen modularen Tank (28) versorgt werden soll, wobei die Gasauslassverbindung (32) wenigstens ein weiteres der Tankmodule (10a) umfasst, das eine Reihe der hohlen Kugeln (12, 12a, 12b) umfasst, die durch das Rohr (18) verbunden sind, und dazu ausgebildet ist, das Gas zur Versorgung der Vorrichtung (34) durch sein Rohr (14) zu leiten,
8.2 einer Gaseinlassverbindung (32) zwischen einer Füllvorrichtung und dem wenigstens einen modularen Tank (28), wobei die Gaseinlassverbindung (32) wenigstens ein weiteres der Tankmodule (10a) umfasst, das eine Reihe der hohlen Kugeln (12, 12a, 12b) umfasst, die durch das Rohr (18) verbunden sind, und dazu ausgebildet ist, das Gas zum Füllen des modularen Tanks (28) durch sein Rohr (14) zu leiten,
8.3 einer Tankverbindung (32) zum Zuführen von Gas aus einem der modularen Tanks (28) zu einem anderen der modularen Tanks (28), wobei die Tankverbindung (32) wenigstens ein weiteres der Tankmodule (10a) umfasst, das eine Reihe der hohlen Kugeln (12, 12a, 12b) umfasst, die durch das Rohr (18) verbunden sind, und dazu ausgebildet ist, das Gas durch sein Rohr (14) von dem einen modularen Tank (28) zu dem anderen modularen Tank (28) zu leiten.

9. Luftfahrzeug, vorzugsweise Flugzeug (22), umfassend einen modularen Luftfahrzeugtank (28) nach einem der Ansprüche 1 bis 6 und/oder ein Tanksystem (26) nach einem der Ansprüche 7 oder 8.

10. Verfahren zum Betreiben eines modularen Tanks (28) nach einem der Ansprüche 1 bis 6 oder eines Tanksystems (26) nach einem der Ansprüche 7 oder 8, **gekennzeichnet durch** den Schritt:
In dem Fall von Undichtheit eines Tankmoduls (10) Entleeren des undichten Tankmoduls (10) und Trennen davon von anderen Tankmodulen (10) und bei einer der nächsten Wartungsarbeiten Ersetzen nur des einzelnen undichten Tankmoduls (10).

11. Verfahren nach Anspruch 10, **gekennzeichnet durch** wenigstens einen der Schritte:
11.1 Ersetzen von Tankmodulen (10) zum Nachfüllen des modularen Tanks (28),
11.2 zuerst Entleeren von äußeren Kugeln (12b) und anschließend Entleeren von inneren Kugeln (12).

## Revendications

1. Réservoir d'aéronef conçu comme un réservoir cryogénique pour stocker du gaz liquéfié, en particulier de l'hydrogène liquéfié, comprenant des sphères creuses (12, 12a, 12b) empilées ensemble en un empilement compact de sphères,
**caractérisé en ce que**
le réservoir d'aéronef est un réservoir d'aéronef modulaire (28) comprenant plusieurs modules de réservoir (10) conçus comme des modules de réservoir cryogéniques (10) pour stocker le gaz liquéfié et remplaçables séparément, dans lequel chacun des modules de réservoir (10) comprend une série des sphères creuses (12, 12a, 12b) raccordées par et montées sur un tube (18) qui est autoportant et conçu pour supporter les charges mécaniques introduites par les sphères (12), et dans lequel un espace entre les modules de réservoir (10) est rempli avec un matériau thermiquement isolant (25).

2. Réservoir d'aéronef modulaire (28) selon la revendication 1, **caractérisé en ce que** les sphères (12, 12a, 12b) possèdent au moins une ou plusieurs des caractéristiques suivantes :
2.1 les sphères (12) sont disposées linéairement,
2.2 les sphères (12) comportent une enveloppe (23) constituée d'un matériau d'enveloppe choisi dans le groupe comprenant un matériau composite, un matériau plastique, un matériau composite renforcé de fibres, un métal, l'aluminium, l'acier et les combinaisons des matériaux susmentionnés,
2.3 les sphères (12) sont emballées dans ou entourées par un matériau thermiquement isolant (25),
2.4 les sphères (12) sont emballées dans un matériau isolant issu du groupe comprenant les aérogels, les mousses et les sphères de verre creuses,
2.5 les sphères (12) comprennent un système de revêtement intérieur thermoplastique, de préférence un système de revêtement intérieur thermoplastique toroïdal,
2.6 les sphères adjacentes (12) se touchent de façon laminaire au niveau de régions polaires,
2.7 les sphères (12) sont disposées de façon centrale sur le tube (14),
2.8 toutes les sphères (12) ont la même taille,
2.9 les sphères (12) ont des tailles différentes,
2.11 les sphères (12) sont supportées par le tube (14),
2.12 chaque sphère (12) est conçue comme un réservoir de LH2 individuel.

3. Réservoir d'aéronef modulaire (28) selon l'une quelconque des revendications précédentes, **caractérisé en ce que** le tube (14) possède au moins une ou plusieurs des caractéristiques suivantes :
3.1 le tube (14) fixe mécaniquement les sphères (12),
3.2 le tube (14) communique avec l'intérieur de chaque sphère creuse (12),
3.3 le tube (14) est conçu comme un tuyau de carburant pour remplir et/ou vider les sphères creuses (12),
3.4 le tube (14) est un tube droit s'étendant linéairement,
3.5 le tube (14) est courbe,
3.6 le tube (14) est constitué d'un matériau choisi dans le groupe comprenant le Kevlar, un matériau composite à base de Kevlar, un matériau composite, un métal, l'aluminium, l'acier, un plastique, un plastique renforcé de fibres et les combinaisons des matériaux susmentionnés,
3.7 le tube (14) est disposé de façon centrale dans le module de réservoir (10),
3.8 le tube (14) passe à travers les sphères (12).

4. Réservoir d'aéronef modulaire (28) selon l'une quelconque des revendications précédentes, **caractérisé par** au moins une ou plusieurs des caractéristiques suivantes :
4.1 plusieurs modules de réservoir linéaires (10) sont disposés verticalement,
4.2 les modules de réservoir (10) sont emballés dans ou entourés par le matériau thermiquement isolant (25),
4.3 les sphères (12) des modules de réservoir voisins se touchent de façon laminaire au niveau de régions polaires,
4.4 les sphères (12) d'au moins un premier et un deuxième module de réservoir (10) ont des tailles différentes.

5. Réservoir d'aéronef modulaire (28) selon l'une quelconque des revendications précédentes, **caractérisé en ce que** le matériau isolant (25) est choisi dans le groupe comprenant les aérogels, les mousses et les sphères de verre creuses.

6. Réservoir d'aéronef modulaire (28) selon l'une quelconque des revendications précédentes, **caractérisé en ce que** le matériau **d'isolation** enveloppant (25) est maintenu en place par une poche à vide (30).

7. Système de réservoirs (26) pour un aéronef, comprenant au moins un réservoir d'aéronef modulaire (28) selon l'une quelconque des revendications précédentes et au moins un ou plusieurs des éléments suivants :
7.1 un réseau 3D de tuyauterie et de vannes (36) raccordant les sphères (12) et/ou les tubes (14) des modules de réservoir (10),
7.2 un dispositif de commande (40) conçu pour commander le remplissage et/ou le vidage de sphères individuelles (12) ou de modules de réservoir individuels (10) ou de groupes individuels de modules de réservoir (10), séparément,
7.3 un dispositif de commande (40) conçu pour commander le vidage des modules de réservoir (10) de telle sorte que les sphères externes (12b) soient vidées en premier, avant que les sphères internes (12) soient vidées.

8. Système de réservoirs (26) selon la revendication 7, comprenant au moins un des éléments suivants :
8.1 un raccord de sortie de gaz (32) entre l'au moins un réservoir modulaire (28) et un dispositif (34) devant être alimenté avec du gaz issu de l'au moins un réservoir modulaire (28), le raccord de sortie de gaz (32) comprenant au moins un autre des modules de réservoir (10a) qui comprend une série des sphères creuses (12, 12a, 12b) raccordées par le tube (18) et étant conçu pour faire passer le gaz destiné à alimenter le dispositif (34) par son tube (14),
8.2 un raccord d'entrée de gaz (32) entre un dispositif de remplissage et l'au moins un réservoir modulaire (28), le raccord d'entrée de gaz (32) comprenant au moins un autre des modules de réservoir (10a) qui comprend une série des sphères creuses (12, 12a, 12b) raccordées par le tube (18) et étant conçu pour faire passer le gaz destiné à remplir le réservoir modulaire (28) par son tube (14),
8.3 un raccord de réservoir (32) destiné à alimenter avec du gaz issu d'un réservoir donné parmi les réservoirs modulaires (28) un autre des réservoirs modulaires (28), le raccord de réservoir (32) comprenant au moins un autre des modules de réservoir (10a) qui comprend une série des sphères creuses (12, 12a, 12b) raccordées par le tube (18) et étant conçu pour faire passer le gaz par son tube (14) du réservoir modulaire donné (28) à l'autre réservoir modulaire (28).

9. Aéronef, de préférence avion (22), comprenant un réservoir d'aéronef modulaire (28) selon l'une quelconque des revendications 1 à 6 et/ou un système de réservoirs (26) selon l'une quelconque des revendications 7 et 8.

10. Procédé de fonctionnement d'un réservoir modulaire (28) selon l'une quelconque des revendications 1 à 6 ou d'un système de réservoirs (26) selon l'une quelconque des revendications 7 et 8, **caractérisé par** l'étape suivante :
en cas de fuite d'un module de réservoir (10), vidage du module de réservoir qui fuit (10) et débranchement de celui-ci des autres modules de réservoir (10) et, lors d'un des travaux de maintenance suivants, remplacement du seul module de réservoir individuel qui fuit (10).

11. Procédé selon la revendication 10, **caractérisé par** au moins une des étapes suivantes :
11.1 remplacement de modules de réservoir (10) en vue de remplir à nouveau le réservoir modulaire (28),
11.2 vidage des sphères externes (12b) en premier, et ensuite vidage des sphères internes (12).
